# EUROPÄISCHE PATENTANMELDUNG

(11) **EP 4 778 373 A1**
(43) Veröffentlichungstag der Anmeldung: **22.07.2026**
(21) Anmeldenummer: 26151341.0
(22) Anmeldetag: 12.01.2026
(51) Int. Cl.: A01B 59/06

(54) **GESTÄNGEBAUGRUPPE FÜR EIN ANHÄNGESYSTEM, INSBESONDERE EINER LANDMASCHINE**

(30) Priorität: 15.01.2025 DE 102025101246; 24.06.2025 DE 102025124408
(71) Anmelder: JOST-Werke Deutschland GmbH, 63263 Neu-Isenburg (DE)
(72) Erfinder: Alaspää, Joakim, 40320 Jyväskylä (FI); Viikki, Timo, 41370 Kuusa (FI)
(74) Vertreter: Ruttensperger Lachnit Trossin Gomoll

(57) **Zusammenfassung**

Eine Gestängebaugruppe (10; 110) für ein Anhängesystem (80) umfasst eine sich längs einer ersten Längsachse (L24) erstreckende erste Stange (24; 124) mit einer Hemmungsgegenformation (66; 158) und eine sich längs einer zweiten Längsachse (L22) erstreckende zweite Stange (22; 122), welche durch eine Kopplungsanordnung (42; 142) verbunden sind, wobei die zweite Stange (22; 122) entlang der ersten Längsachse (L24) verschiebbar ist zwischen einer unteren Position und einer oberen Position,
wobei die Kopplungsanordnung (42; 142) eine erste Kopplungsformation (44; 144) und eine zweite Kopplungsformation (46; 146) mit einer Hemmungsformation (58; 166) aufweist,
wobei die zweite Kopplungsformation (46; 146) relativ zur ersten Stange (24; 124) in eine von einer ersten und einer zweiten Betriebsstellung verschiedene dritte Betriebsstellung bringbar ist, in welcher die Hemmungsformation (58; 166) mit der Hemmungsgegenformation (66; 158) eine Bewegung der zweiten Stange (22; 122) relativ zur ersten Stange (24; 124) von der oberen Position hin zur unteren Position hemmt.

Eine Formation aus Hemmungsformation (58; 166) und Hemmungsgegenformation (66; 158) weist einen Rastvorsprung (58; 158) und die jeweils andere Formation weist eine Rastausnehmung (66) auf, wobei in der dritten Betriebsstellung die Hemmungsformation (58; 166) und die Hemmungsgegenformation (66; 158) sich, gegen eine Vorspannung ausrückbar, in einem überwindbaren Rasteingriff befinden.

## Beschreibung

Die vorliegende Anmeldung betrifft eine Gestängebaugruppe für ein Anhängesystem. Dabei ist insbesondere an ein Anhängesystem für Landmaschinen, wie etwa Traktoren, landwirtschaftliche Zugmaschinen und dergleichen, gedacht. Ein bevorzugtes Anhängesystem ist eine Dreipunktaufhängung. Diese ist in der einschlägigen Fachwelt auch als 'Dreipunktaufnahme' oder 'Dreipunkt-Kraftheber' oder 'Dreipunkthydraulik' bezeichnet.

Die Gestängebaugruppe umfasst eine sich längs einer virtuellen ersten Längsachse erstreckende erste Stange und eine sich längs einer virtuellen zweiten Längsachse erstreckende zweite Stange. Die erste und die zweite Stange sind durch eine Kopplungsanordnung verbunden. Die erste und die zweite Längsachse schließen einen Winkel ein. Die zweite Stange ist am Ort ihrer Kopplung mit der ersten Stange relativ zur ersten Stange entlang der ersten Längsachse verschiebbar zwischen einer näher bei einem Längsende der ersten Stange gelegenen längsendnäheren Position und einer weiter von dem Längsende entfernt gelegenen längsendferneren Position.

Die Kopplungsanordnung weist eine erste Kopplungsformation und eine zweite Kopplungsformation auf. Die erste Kopplungsformation ist an der ersten Stange angeordnet. Die zweite Kopplungsformation ist sowohl relativ zur ersten Stange als auch relativ zur zweiten Stange beweglich an der zweiten Stange angeordnet.

Die zweite Kopplungsformation weist eine Anlageformation sowie eine Hemmungsformation auf. Die erste Stange weist eine Anlagegegenformation sowie eine Hemmungsgegenformation auf.

Die zweite Kopplungsformation ist relativ zur ersten Stange in eine erste Betriebsstellung bringbar, welche einer ersten Konfiguration der Gestängebaugruppe zugeordnet ist, in der die Anlageformation an der Anlagegegenformation anliegt und dadurch eine Bewegung der zweiten Stange relativ zur ersten Stange von der längsendnäheren Position hin zur längsendferneren Position hemmt.

Die zweite Kopplungsformation ist relativ zur ersten Stange in eine von der ersten Betriebsstellung verschiedene zweite Betriebsstellung bringbar, in welcher eine Bewegung der zweiten Stange relativ zur ersten Stange entlang der ersten Längsachse gestattet ist. Die zweite Betriebsstellung der zweiten Kopplungsformation ist somit einer zweiten Konfiguration der Gestängebaugruppe zugeordnet.

Die zweite Kopplungsformation ist relativ zur ersten Stange in eine von der ersten und der zweiten Betriebsstellung verschiedene dritte Betriebsstellung bringbar, welche einer dritten Konfiguration der Gestängebaugruppe zugeordnet ist, in der die Hemmungsformation mit der Hemmungsgegenformation zusammenwirkt und dadurch eine Bewegung der zweiten Stange relativ zur ersten Stange von der längsendferneren Position hin zur längsendnäheren Position hemmt.

Eine derartige Gestängebaugruppe als Teil einer Dreipunktaufhängung einer landwirtschaftlichen Zugmaschine ist aus der EP 4 085 739 A1 bekannt. Die dort als plattenförmige Bauteilanordnung ausgebildete und je ein als 'ending plate' und als 'fixing plate' bezeichnetes Plattenbauteil umfassende zweite Kopplungsformation weist parallele Seitenränder als Anlageformation auf und weist zu beiden Seiten über die Seitenränder jeweils vorstehende Ausstülpungen als Hemmungsformation auf. Sie ist rotierbar an der zweiten Stange befestigt. Die beiden im Wesentlichen identisch ausgebildeten Plattenbauteile halten zwischen sich die erste Kopplungsformation und die zweite Stange. Die Plattenbauteile sind mittels eines zylindrischen Verbindungsschafts miteinander verbunden. Der Schaft definiert die Rotationsachse, um welche die bekannte zweite Kopplungsformation rotieren kann.

Die zweite Stange ist in der EP 4 085 739 A1, ebenso wie es auch für die vorliegende Gestängebaugruppe bevorzugt ist, ein Unterlenker einer Dreipunktaufhängung eines Traktors oder allgemein einer landwirtschaftlichen Zugmaschine.

Die erste Stange ist in der EP 4 085 739 A1 als 'lifting rod' bezeichnet und bildet, ebenso wie es auch für die vorliegende Gestängebaugruppe bevorzugt ist, eine Hubstange der Dreipunktaufhängung, welche den Unterlenker mit einem Hubarm der Dreipunktaufhängung verbindet.

Die aus der EP 4 085 739 A1 bekannte erste Kopplungsformation weist in jedem Schenkel eines längsendseitigen Gabelabschnitts der ersten Stange ein längs der ersten Längsachse verlaufendes Durchgangslangloch und zwei einstückig mit dem Gabelabschnitt der ersten Stange ausgebildete, sowohl zueinander als auch zur ersten Längsachse parallele leistenartige Vorsprünge auf. Die Ausführungen dieses Absatzes beschreiben nicht nur den Stand der Technik, sondern auch eine bevorzugte Ausgestaltung der Gestängebaugruppe der vorliegenden Anmeldung.

Die Durchgangslanglöcher beider Schenkel des Gabelabschnitts sowie ein die zweite Stange durchsetzendes komplementäres Durchgangsloch werden von dem Verbindungsschaft der zweiten Kopplungsformation durchsetzt. Ein die beiden Durchgangslanglöcher umgebendes Material der Gabelschenkel der ersten Stange wird so durch die zweite Kopplungsformation, genauer: durch deren Plattenbauteile, hintergriffen. Die zweite Kopplungsformation ist auf diese Art an der zweiten Stange angeordnet und durch Rotation um die Schaftachse des Verbindungsschafts zwischen den genannten Betriebsstellungen verstellbar. Die Ausführungen dieses Absatzes beschreiben ebenso nicht nur den Stand der Technik, sondern auch eine bevorzugte Ausgestaltung der Gestängebaugruppe der vorliegenden Anmeldung.

Die längsendnäheren Längsenden der leistenartigen Vorsprünge bilden die Anlagegegenformation. Die entgegengesetzten längsendferneren Längsenden der leistenartigen Vorsprünge bilden die Hemmungsgegenformation und die aufeinander zu weisenden Flanken der leistenartigen Vorsprünge stehen in der zweiten Betriebsstellung mit den Seitenrändern der zweiten Kopplungsformation in einem Gleitanlageeingriff, um eine Bewegung der zweiten Kopplungsformation und mit dieser eine translatorische Bewegung der zweiten Stange längs der ersten Längsachse zu führen. Die beiden leistenartigen Vorsprünge bilden somit eine längs der ersten Längsachse verlaufende Nut, in welcher die zweite Kopplungsformation in der zweiten Betriebsstellung längs der ersten Längsachse gleiten kann. Dementsprechend verlaufen auch die Seitenränder der zweiten Kopplungsformation in deren zweiter Betriebsstellung sowohl zueinander als auch zur ersten Längsachse parallel. Die Ausführungen dieses Absatzes beschreiben nicht nur den Stand der Technik, sondern auch eine bevorzugte Ausgestaltung der Gestängebaugruppe der vorliegenden Anmeldung.

Durch Wahl der Länge des Durchgangslanglochs sowie durch die Positionierung des Durchgangslanglochs an der ersten Stange relativ zu den die Anlagegegenformation bildenden Längsenden der leistenartigen Vorsprünge verbindet die Kopplungsanordnung dann, wenn sich die zweite Kopplungsformation in ihrer ersten Betriebsstellung befindet, die zweite Stange mit der ersten Stange längs der ersten Längsachse im Wesentlichen spielfrei. Das dem nächstgelegenen Längsende der ersten Stange nächstgelegene Längsende des Durchgangslanglochs liegt körperlich an dem es durchsetzenden Verbindungsschaft an und die Anlageformation liegt an der Anlagegegenformation an. Die genannten Anlageorte von Verbindungsschaft und Längsende des Durchgangslochs einerseits und von Anlageformation und Anlagegegenformation andererseits liegen auf unterschiedlichen Seiten der durch den Verbindungsschaft definierten Rotationsachse und gestatten so eine längs der ersten Längsachse im Wesentlichen spielfreie Klemmung der zweiten Kopplungsformation durch die erste Stange und die zweite Stange. Die Ausführungen dieses Absatzes beschreiben nicht nur den Stand der Technik, sondern auch eine bevorzugte Ausgestaltung der Gestängebaugruppe der vorliegenden Anmeldung.

Die erste Betriebsstellung ist eine Betriebsstellung, in welcher sich der Unterlenker bzw. die zweite Stange bezüglich der im bestimmungsgemäßen Betrieb überwiegend vertikal verlaufenden Hubstange bzw. ersten Stange an einer festen untersten Stellung befindet. Die erste Betriebsstellung der zweiten Kopplungsformation ist somit der oben genannten ersten Konfiguration der Gestängebaugruppe zugeordnet. In dieser festen untersten Stellung ist die vertikale Position eines an der Dreipunktaufhängung aufgehängten Arbeitsgeräts durch einen Hubaktuator genau einstellbar. Eine solche genaue vertikale Positionierung ist beispielsweise für Pflüge erforderlich. Die Ausführungen dieses Absatzes beschreiben nicht nur den Stand der Technik, sondern auch eine bevorzugte Ausgestaltung der Gestängebaugruppe der vorliegenden Anmeldung.

Die zweite Betriebsstellung ist eine Schwimmstellung, in welcher die zweite Stange relativ zur ersten Stange in einem vorbestimmten Umfang, etwa vorbestimmt durch die Länge des Durchgangslanglochs, entlang der ersten Längsachse beweglich ist. 'Entlang einer Längsachse' oder "längs einer Längsachse' bedeuten im Sinne der vorliegenden Anmeldung im Übrigen nicht zwingende Parallelität zur Längsachse, wenngleich dies bevorzugt ist. Eine Bewegung erfolgt bereits dann 'entlang einer Längsachse' oder 'längs einer Längsachse', wenn die Bewegung eine axiale Bewegungskomponente entlang oder längs der Längsachse aufweist, wobei bevorzugt die axiale Bewegungskomponente im Vergleich zu zwei zueinander und zur axialen Bewegungskomponente orthogonalen Bewegungskomponenten die betragsmäßig größte Bewegungskomponente ist. Die zweite Betriebsstellung der zweiten Kopplungsformation ist somit der oben genannten zweiten Konfiguration der Gestängebaugruppe zugeordnet.

Die Schwimmstellung ist eine Betriebsstellung, welche beispielsweise für landwirtschaftliche Arbeitsgeräte benötigt wird, die einer Geländeoberfläche folgen sollen, wie beispielsweise eine Walze oder manche Eggen. Die Ausführungen dieses Absatzes beschreiben nicht nur den Stand der Technik, sondern ebenso eine bevorzugte Ausgestaltung der Gestängebaugruppe der vorliegenden Anmeldung.

Dann, wenn sich die zweite Kopplungsformation in ihrer dritten Betriebsstellung befindet, befindet sich die zweite Stange relativ zur ersten Stange in einer obersten Betriebsstellung. Die dritte Betriebsstellung der zweiten Kopplungsformation ist somit der oben genannten dritten Konfiguration der Gestängebaugruppe zugeordnet. Analog zur ersten Betriebsstellung ist durch Abmessung und Positionierung des Durchgangslangloch in den jeweiligen Schenkeln des Gabelabschnitts der ersten Stange die zweite Stange relativ zur ersten Stange längs der ersten Längsachse im Wesentlichen spielfrei festgelegt. Die Ausführungen dieses Absatzes beschreiben nicht nur den Stand der Technik, sondern ebenso eine bevorzugte Ausgestaltung der Gestängebaugruppe der vorliegenden Anmeldung.

Diese oberste Betriebsstellung wird beispielsweise dann gewählt, wenn an dem Anhängesystem keine Last angehängt ist, etwa wenn ein das Anhängesystem tragendes Zugfahrzeug rangieren soll und Kollisionen des Anhängesystems mit bodennahen Objekten vermieden werden sollen. In der zweiten Betriebsstellung ruhen die als seitliche, über die Seitenränder der Plattenbauteile der zweiten Kopplungsformation hinaus vorstehenden Ausstülpungen gemäß EP 4 085 739 A1 auf den in der betriebsbereiten Anordnung oberen, dem nächstgelegenen Längsende der ersten Stange ferner gelegenen Längsenden der leistenartigen Vorsprünge.

Wird nun aus Nachlässigkeit eine Last an das Anhängesystem angehängt, während die zweite Stange sich in ihrer obersten Betriebsstellung und die zweite Kopplungsformation sich in ihrer dritten Betriebsstellung befindet, kann die aufgrund der angehängten Last auf die Ausstülpungen der zweiten Kopplungsformation wirkende Kraft die Festigkeitsgrenzen der Ausstülpungen der zweiten Kopplungsformation überschreiten und so die zweite Kopplungsformation durch Bruch oder plastische Verformung zerstören.

Es ist Aufgabe der vorliegenden Erfindung, das Risiko einer versehentlichen Zerstörung der zweiten Kopplungsformation, und damit der Gestängebaugruppe insgesamt, dann, wenn sich die zweite Kopplungsformation in der dritten Betriebsstellung befindet, wenigstens zu verringern.

Die vorliegende Erfindung löst diese Aufgabe an einer Gestängebaugruppe der eingangs genannten Art dadurch, dass eine Formation aus Hemmungsformation und Hemmungsgegenformation einen Rastvorsprung und die jeweils andere Formation aus Hemmungsformation und Hemmungsgegenformation eine Rastausnehmung aufweist, wobei in der dritten Betriebsstellung die Hemmungsformation und die Hemmungsgegenformation sich, gegen eine Vorspannung ausrückbar, in einem überwindbaren Rasteingriff befinden. Ein Rasteingriff ist dabei ein formschlüssiger Eingriff, bei welchem der Rastvorsprung in die Rastausnehmung einragt.

Der überwindbare Rasteingriff beruht zum einen auf einer den Rasteingriff bewirkenden oder/und sichernden Vorspannkraft, mit welcher wenigstens eine Struktur aus Rastvorsprung und Rastausnehmung im Rasteingriff einer Entnahme aus dem Rasteingriff entgegenwirkt, und beruht zum anderen auf der Gestalt von Rastvorsprung und Rastausnehmung. Die Gestalt von Rastvorsprung und Rastausnehmung im Rasteingriff bewirkt, dass und in welchem Verhältnis eine von außen längs der ersten Längsachse von der längsendferneren Position zur längsendnäheren Position hin wirkende äußere Kraft in eine der sichernden Vorspannkraft entgegengesetzte Kraftkomponente übersetzt wird. Somit kann durch die Gestalt von Rastvorsprung und Rastausnehmung sowie durch den Betrag der sichernden Vorspannkraft die Grenzbelastung eingestellt werden, ab welcher die von außen auf die Gestängebaugruppe, insbesondere auf die zweite Stange, einwirkende äußere Kraft den überwindbaren Rasteingriff von Rastvorsprung und Rastausnehmung löst. Zwar setzt bei Überwindung des Rasteingriffs eine Relativbewegung von erster und zweiter Stange relativ zueinander ein, jedoch wird eine Zerstörung der Gestängebaugruppe oder deren Unbrauchbarmachung durch Verformung vermieden. Eine Verformung des Rastvorsprungs oder/und der Rastausnehmung während der Überwindung ist im Wesentlichen ausschließlich elastisch reversibel.

Die bei Überwindung des Rasteingriffs einsetzende Relativbewegung und damit die Aufgabe der durch die dritte Betriebsstellung zunächst gesicherten Relativposition von erster und zweiter Stange ist ohne weiteres hinnehmbar, da die dritte Betriebsstellung der zweiten Kopplungsformation in der Regel dann gewählt wird, wenn die Gestängebaugruppe frei von äußeren Traglasten ist bzw. sein soll.

Werden in der dritten Betriebsstellung äußere Traglasten auf die Gestängebaugruppe ausgeübt, hätte in der Regel zuvor die dritte Betriebsstellung in die erste oder die zweite Betriebsstellung gewechselt werden müssen oder die Ausübung von äußeren Traglasten hätte nicht erfolgen dürfen. Somit bleibt die Überwindung des Rasteingriffs in der dritten Betriebsstellung der zweiten Kopplungsformation in der Regel ohne nachteilige Folgen. Es ist lediglich eine Betriebsstellung aus der ersten, der zweiten oder der dritten Betriebsstellung herzustellen.

Grundsätzlich kann die Rastausnehmung so ausreichend gegen Federvorspannung verlagerbar oder/und elastisch verformbar ausgebildet sein, dass beim Überwinden des hergestellten Rasteingriffs die Rastausnehmung unter Einfluss einer ausreichend großen äußeren Kraft zurückweicht und den Rastvorsprung aus dem Rasteingriff entlässt. Alternativ oder zusätzlich kann der Rastvorsprung gegen Federvorspannung verlagerbar oder/und elastisch verformbar ausgebildet sein, sodass dieser unter Einfluss einer ausreichend großen äußeren Kraft aus der Rastausnehmung zurückweicht und dieser entkommt.

Gemäß einer mit vorteilhaft geringem Aufwand realisierbaren und daher bevorzugten Ausführungsform ist der Rastvorsprung, bevorzugt nur der Rastvorsprung, ein gegen seine Bauteilelastizität zwischen einer Rasteingriffsgestalt und einer Außereingriffsgestalt verformbarer Rastvorsprung. Die Rastausnehmung ist bevorzugt im Vergleich zum Rastvorsprung starr, sodass die Überwindung eines zwischen Rastvorsprung und Rastausnehmung hergestellten Rasteingriffs bevorzugt nur durch Verlagerung oder/und Verformung des Rastvorsprungs erfolgt. Da die Rastausnehmung den Rastvorsprung im Rasteingriff umgibt, ist in der Regel der für eine Überwindung des Rasteingriffs erforderliche Bau- oder Bewegungsraum des Rastvorsprungs geringer als der zum gleichen Zweck benötigte Raum einer Verlagerung oder/und Verformung der Rastausnehmung. Die Bauteilelastizität des Rastvorsprungs ist bestimmt durch die Gestalt des Rastvorsprungs und die Materialelastizität des wenigstens einen zur Herstellung des Rastvorsprungs verwendeten Materials.

Bevorzugt ist der Rastvorsprung als Feder ausgebildet. Dann kann durch Federgestalt und Federhärte sowie Einbausituation des Rastvorsprungs einfach und genau eine von außen auf die Gestängebaugruppe einwirkende Grenzbelastung eingestellt werden, bei deren Überschreiten sich der Rastvorsprung so stark verformt, dass er den Rasteingriff mit der Rastausnehmung verlässt. Die Rastvorsprung kann aus Draht als Drahtfeder ausgestaltet sein, sodass durch den Drahtquerschnitt und die Federform beliebig hohe Steifigkeiten und somit Verformungs- oder/und Verlagerungswiderstände realisierbar sind.

Gemäß einer bevorzugten Ausführungsform der vorliegenden Erfindung kann der Rastvorsprung als eine Feder in Gestalt eines Spannstiftes ausgeführt sein oder einen Spannstift umfassen. Ein Spannstift, in der Fachwelt auch als "Spannhülse" bezeichnet, ist ein weit verbreitetes kommerziell erhältliches Maschinenelement, das deshalb kostengünstig beschafft werden kann. Der Spannstift ist ein längs einer Stiftachse verlaufendes rohrförmiges hohles Bauteil, welches seine Federeigenschaft einem längs der, vorzugsweise parallel zur, Stiftachse verlaufenden Schlitzes verdankt.

Ein als Rastvorsprung verwendeter Spannstift ist bevorzugt ein gemäß einer Industrienorm, wie etwa EN ISO 8750, EN ISO 8751, EN ISO 8752 oder EN ISO 13337, gefertigter Spannstift, insbesondere zylindrischer Spannstift. Normierte Spannstifte können in großer Anzahl mit im Wesentlichen gleichen Bauteileigenschaften zu geringen Kosten beschafft werden.

Eine insbesondere mit dem Spannstift als Rastvorsprung zusammenwirkende Rastausnehmung kann bevorzugt als Rastmaul ausgebildet sein. Das bevorzugte Rastmaul weist einen Mauleintritt mit einer engeren lichten Weite und einen Maulaufnahmeraum mit einer weiteren lichten Weite auf. Durch den Mauleintritt hindurch kann der Rastvorsprung durch vorübergehende Verformung seiner selbst in den Maulaufnahmeraum gelangen. Eine Herstellung des Rasteingriffs erfolgt durch eine Relativbewegung von Rastvorsprung und Rastausnehmung längs einer Einführbahn, in deren Folge der Rastvorsprung, insbesondere in Gestalt eines Spannstifts, durch den Mauleintritt in den Maulaufnahmeraum gelangt. Die oben genannten lichten Weiten sind daher orthogonal zur Einführbahn zu messen. Bevorzugt verläuft die Einführbahn entlang der, besonders bevorzugt parallel zur, ersten Längsachse.

Die zur Herstellung und zur Überwindung des Rasteingriffs benötigte Kraft kann durch die Wahl des Materials und von Abmessungen, wie etwa Wandstärke und Außendurchmesser, des als Rastvorsprung bevorzugten Spannstiftes sowie durch den Unterschied zwischen lichter Weite des Mauleintritts und in gleicher Richtung zu messender Außenabmessung des Spannstiftes eingestellt werden.

Grundsätzlich kann zusätzlich oder alternativ auch daran gedacht sein, die den Mauleintritt bildenden Flanken der als Rastmaul ausgebildeten Rastausnehmung in Richtung aufeinander zu oder/und voneinander weg elastisch federnd auszugestalten.

Eine vorteilhaft geringere Flächenpressung zwischen dem Rastvorsprung und einem an dem Rastvorsprung anliegenden Bauteil, wie insbesondere der Rastausnehmung, kann dadurch erreicht werden, dass der Rastvorsprung wenigstens abschnittsweise eine Flachfeder umfasst oder als eine Flachfeder ausgestaltet ist. Eine Flachfeder ist aus einem Federmaterial gebildet, dessen Dicke erheblich kleiner ist als dessen Breite und noch weiter erheblich kleiner als dessen Länge. Bevorzugt ist die Dicke des Federmaterials nicht mehr als ein Drittel der Breite des Federmaterials, besonders bevorzugt nicht mehr als ein Fünftel. Bekannte Flachfedern sind beispielsweise Blattfedern. Besonders bevorzugt ist der Rastvorsprung eine Flachfeder. Diese kann einseitig an einem Federträger eingespannt sein und einseitig vom Federträger auskragen.

Abriebsituationen zwischen dem Rastvorsprung und einer Oberfläche, entlang welcher der Rastvorsprung im Betrieb gleitet, können dadurch vermieden werden, dass der Rastvorsprung eine gekrümmte Flachfeder umfasst oder bevorzugt eine gekrümmte Flachfeder ist. Um unerwünschte Kippmomente an der Kopplungsanordnung während des Herstellens oder/und des Überwindens eines Rasteingriffs des Rastvorsprungs zu vermeiden, ist der Rastvorsprung bevorzugt ein spiegelsymmetrisches Bauteil. Als solches umfasst oder ist der Rastvorsprung eine beidseitig an einem Federträger eingespannte, vorzugsweise gekrümmte, Flachfeder. Auch der oben genannte elastisch verformbare Spannstift ist bevorzugt ein spiegelsymmetrisches Bauteil. Die Stiftachse liegt bevorzugt in der Symmetrieebene des Spannstifts, ebenso dessen Längsschlitz.

Die Spiegelsymmetrieebene des bevorzugt spiegelsymmetrischen Rastvorsprungs verläuft bei Betrachtung in der dritten Betriebssituation bevorzugt parallel zur ersten Längsachse oder enthält diese. Dadurch kann der Rasteingriff bei äußerer Einwirkung einer längs der ersten Längsachse wirkenden Kraft momentenfrei mit lediglich vernachlässigbaren Drehmomenteinflüssen überwunden werden.

Grundsätzlich kann die erste Kopplungsformation den Rastvorsprung aufweisen. Dies ist beispielsweise bevorzugt dann der Fall, wenn der Rastvorsprung durch den oben genannten Spannstift ausgebildet ist. In dieser bevorzugten Ausführungsform kann die zweite Kopplungsformation die Rastausnehmung, insbesondere in Gestalt des oben beschriebenen Rastmauls, aufweisen. Die erste Stange trägt dann bevorzugt den Rastvorsprung, insbesondere in Gestalt eines Spannstifts.

Die zweite Kopplungsformation kann zur erleichterten Herstellung des Rasteingriffs die Rastausnehmung in vorteilhafter Weiterbildung der Erfindung an einem zur Herstellung der dritten Konfiguration der Gestängebaugruppe längs der ersten Längsachse vorauseilenden Bauteilrand aufweisen. Vom Bauteilrand kann das Rastmaul sich in die zweite Kopplungsformation hinein erstrecken. Dann wird kein eigenes Bauteil zur Bereitstellung der Rastausnehmung benötigt, sondern die Rastausnehmung kann vorteilhaft in die zweite Kopplungsformation integriert sein.

Ein entgegengesetzter Bauteilrand der zweiten Kopplungsformation oder/und ein in der zweiten Konfiguration der Gestängebaugruppe während einer Bewegung der zweiten Kopplungsformation relativ zur ersten Stange in Richtung von der längsendnäheren Position zur längsendferneren Position hin vorauseilender Bauteilrand der zweiten Kopplungsformation kann eine Ausnehmung aufweisen, welche bevorzugt so bemessen ist, dass der Rastvorsprung in sie einfahren und aus ihr austreten kann, ohne einen Rasteingriff mit der zweiten Kopplungsformation zu bewirken. Durch diese Ausnehmung kann die Relativbewegungsstrecke von zweiter Kopplungsformation und erster Stange längs der ersten Achse in der zweiten Konfiguration der Gestängebaugruppe trotz Anordnung eines Rastvorsprungs in der Relativbewegungsbahn der zweiten Kopplungsformation verlängert werden.

Um unerwünschte übermäßige Bauteilschwächungen durch Materialausnehmungen zu vermeiden, kann der Rastvorsprung an dem materialärmeren Bauteil aus zweiter Kopplungsformation und erster Stange ausgebildet sein. Dies ist in der Regel die zweite Kopplungsformation. Folgerichtig weist in diesem Fall bevorzugt die erste Stange die Rastausnehmung auf.

Um eine geordnete Relativbewegung zwischen erster und zweiter Stange sicherzustellen, weist bevorzugt die zweite Kopplungsformation eine Führungsformation auf, welche in der zweiten Betriebsstellung mit einer Führungsgegenformation der ersten Stange in Führungseingriff steht, um eine Bewegung der zweiten Stange relativ zur ersten Stange entlang der ersten Längsachse zu führen. Dies bedeutet ausdrücklich nicht, dass die Führungsformation nur in der zweiten Betriebsstellung der zweiten Kopplungsformation mit der Führungsgegenformation in Führungseingriff steht. Dies kann auch in anderen Betriebsstellungen der zweiten Kopplungsformation der Fall sein. Die Führungsformation der zweiten Kopplungsformation umfasst bevorzugt wenigstens einen Seitenrand, bevorzugt zwei einander entgegengesetzte parallele Seitenränder eines, bevorzugt plattenförmigen, Bauteils oder Bauteilabschnitts der zweiten Kopplungsformation. Das bevorzugt plattenförmige Bauteil bzw. der bevorzugt plattenförmige Bauteilabschnitt kann das oben genannte Rastmaul oder/und die oben genannte Ausnehmung aufweisen.

Eine bevorzugte Ausführungsform der Führungsgegenformation umfasst wenigstens eine, vorzugsweise zwei, zur ersten Längsachse und zueinander parallele leistenartige Vorsprünge an der ersten Stange, wie bereits eingangs beschrieben wurde. Wie ebenfalls eingangs beschrieben wurde, bilden die parallelen leistenartigen Vorsprünge bevorzugt zwischen sich eine sich längs der ersten Längsachse, vorzugsweise parallel zu dieser, erstreckende Nut, in welcher wenigstens ein Abschnitt der zweiten Kopplungsformation in der zweiten Betriebsstellung gleiten kann.

Weiter bevorzugt weist auch die erste Stange, wie eingangs bereits dargelegt, einen die zweite Stange umgreifenden Gabelabschnitt auf, wobei sich die zweite Stange zwischen den beiden Gabelschenkeln befindet. Der Gabelabschnitt reicht bevorzugt bis zu einem Längsende der ersten Stange. Vorzugsweise weist jeder Gabelschenkel die Führungsgegenformation und die Hemmungsgegenformation auf.

Das eingangs genannte Längsende der ersten Stange, auf welches sich die Endpositionen der Verschiebbarkeit der zweiten Stange relativ zur ersten Stange längs der ersten Längsachse beziehen, ist bevorzugt das dem Kopplungsort von erster und zweiter Stange nächstgelegene Längsende der ersten Stange.

Weiter durchsetzt ein Schaft der zweiten Kopplungsformation bevorzugt die zweite Stange. Dadurch ist der Schaft und in der Folge die zweite Kopplungsformation an der zweiten Stange angeordnet. Ebenfalls durchsetzt der Schaft der zweiten Kopplungsformation ein sich längs der ersten Längsachse, vorzugsweise parallel zur ersten Längsachse, erstreckendes Durchgangslangloch in der ersten Stange, bevorzugt in jedem Gabelschenkel des Gabelabschnitts. Der Schaft ist dann Teil der Führungsformation und das wenigstens eine Durchgangslangloch ist Teil der Führungsgegenformation.

Um sicherzustellen, dass die Hemmungsformation und die Hemmungsgegenformation in einen gewünschten Wirkeingriff gelangen können, etwa in den oben genannten überwindbaren Rasteingriff, ist gemäß einer bevorzugten Weiterbildung die Hemmungsgegenformation in einem längs der ersten Längsachse verlaufenden Längserstreckungsbereich der Führungsgegenformation ausgebildet. Dadurch können die Hemmungsformation und die Hemmungsgegenformation sicher in einen Wirkeingriff miteinander geführt werden. Die Führungsgegenformation erstreckt sich bevorzugt längs der ersten Längsachse zu beiden Seiten über die Hemmungsgegenformation hinaus.

Für eine Bildung der Gestängebaugruppe mit einer möglichst geringen Anzahl an Bauteilen ist bevorzugt die Hemmungsgegenformation in der Führungsgegenformation ausgebildet. Zu diesem Zweck ist bevorzugt die Hemmungsgegenformation die Rastausnehmung. Besonders bevorzugt umfasst die Führungsgegenformation den wenigstens einen leistenartigen Vorsprung, vorzugsweise die zwei parallelen leistenartigen Vorsprünge, welche bevorzugt die Rastausnehmungen aufweisen. Die Rastausnehmungen können als einfache Materialausnehmungen in dem wenigstens einen leistenartigen Vorsprung ausgebildet sein. Bei der besonders bevorzugten Ausführungsform mit zwei zueinander parallelen leistenartigen Vorsprüngen ist bevorzugt je eine Teil-Rastausnehmung in jeder der aufeinander zu weisenden Flanken der leistenartigen Vorsprünge ausgebildet. Die Hemmungsgegenformation, insbesondere als ein durch wenigstens einen, optional genau einen, Spannstift gebildeter Rastvorsprung, kann zwischen den zwei zueinander parallelen leistenartigen Vorsprüngen, bevorzugt mit Abstand von diesen, ausgebildet oder/und angeordnet sein. So bleibt die Führungsgegenformation unbelastet durch Materialabnahme oder durch Anbringung eines Rastvorsprungs daran und kann ihre Führungsfunktion besonders genau erfüllen.

Dies gilt bevorzugt für jeden Gabelschenkel des oben genannten Gabelabschnitts.

Zur Vermeidung unerwünschter Kerbeffekte ist die wenigstens eine Rastausnehmung bevorzugt knickfrei konkav gekrümmt ausgestaltet. Als Knick gilt dabei eine Krümmung mit einem Krümmungsradius von weniger als 1 mm.

Damit sich unmittelbar nach einer Überwindung des Rasteingriffs durch eine Fehlbedienung der Gestängebaugruppe in ihrer der dritten Betriebsstellung zugeordneten dritten Konfiguration die erste und die zweite Stange kontrolliert relativ zueinander bewegen, stehen bevorzugt die Führungsformation und die Führungsgegenformation auch in der dritten Betriebsstellung in Führungseingriff miteinander. Besonders bevorzugt stehen die Seitenränder der zweiten Kopplungsformation mit den leistenartigen Vorsprüngen, insbesondere mit deren aufeinander zu weisenden Flanken, in Führungseingriff.

Bevorzugt verläuft die Führungsgegenformation, besonders bevorzugt der wenigstens eine leistenartige Vorsprung, längs der ersten Längsachse beiderseits über die Hemmungsgegenformation hinaus. Dadurch wird sicher eine unerwünschte Betriebsstellung vermieden, bei welcher der Rastvorsprung an einem Längsende der Führungsgegenformation, insbesondere des wenigstens einen leistenartigen Vorsprungs, anliegt oder dieses Längsende in einer Art einer weiteren Verrastung hintergreift. Es handelt sich dabei bevorzugt um jenes Längsende, welches dem bevorzugt die Anlagegegenformation bildenden Längsende der Führungsformation, insbesondere des wenigstens einen leistenartigen Vorsprungs, entgegengesetzt ist.

Grundsätzlich kann es ausreichen, dass die erste und die zweite Stange nur translatorisch relativ zueinander längs der ersten Längsachse verlagerbar angeordnet sind. Gerade für die bevorzugte Verwendung der vorstehend beschriebenen Gestängebaugruppe in einer Dreipunktaufhängung sind jedoch bevorzugt die erste und die zweite Stange um eine Schwenkachse schwenkbar miteinander verbunden. Dann ist der zwischen der ersten und der zweiten Stange eingeschlossene Winkel veränderlich. Die Schwenkachse verläuft sowohl quer zur ersten Längsachse als auch quer zur zweiten Längsachse.

Um die zweite Kopplungsformation in einem möglichst kleinen Bewegungsraum zwischen der ersten, der zweiten und der dritten Betriebsstellung verstellen zu können, ist bevorzugt die zweite Kopplungsformation durch Rotation um eine Rotationsachse zwischen der ersten, der zweiten und der dritten Betriebsstellung verstellbar. Bevorzugt ist dabei die Schwenkachse die Rotationsachse.

In diesem Fall der Rotierbarkeit der zweiten Kopplungsformation ist bevorzugt die zweite Kopplungsformation sowohl relativ zur ersten Stange als auch relativ zur zweiten Stange um die Schwenkachse schwenkbar an der zweiten Stange angelenkt, besonders bevorzugt durch den Verbindungsschaft.

Bevorzugt ist für eine vorteilhafte Einleitung einer äußeren Kraft in die zweite Kopplungsformation die zweite Kopplungsformation zumindest in der zweiten oder/und dritten Betriebsstellung spiegelsymmetrisch bezüglich einer zu dem genannten Verbindungsschaft orthogonalen Symmetrieebene ausgebildet. Weiter bevorzugt ist die zweite Kopplungsformation zumindest in der zweiten oder/und der dritten Betriebsstellung spiegelsymmetrisch bezüglich einer Symmetrieachse, welche parallel oder komplanar ist zu einer durch eine Mittelachse des genannten Verbindungsschafts und die erste Längsachse aufgespannten Ebene.

Bevorzugt umfasst die zweite Kopplungsformation wenigstens ein plattenförmiges Bauteil, von welcher der Verbindungsschaft auskragt. Besonders bevorzugt verbindet der Verbindungsschaft zwei im Wesentlichen identische plattenförmige Bauteile. Das wenigstens eine plattenförmige Bauteil, vorzugsweise die beiden plattenförmigen Bauteile, ist bzw. sind weiter bevorzugt der oben genannte Federträger des als Feder ausgebildeten Rastvorsprungs oder, wie vorstehend bereits beschrieben, Träger der Rastausnehmung. In einer bevorzugten Ausgestaltung kann das wenigstens eine Längsende einer zur Bildung des Rastvorsprungs beitragenden Flachfeder in das plattenförmige Bauteil eingeklemmt oder eingeschmiedet oder eingegossen sein.

Bei der bevorzugten Verwendung der oben beschriebenen Gestängebaugruppe in einer Dreipunktaufhängung ist die erste Stange eine Hubstange einer Dreipunktaufhängung und ist die zweite Stange ein Unterlenker der Dreipunktaufhängung.

Die vorliegende Anmeldung betrifft ebenso ein Anhängesystem für eine Landmaschine mit einer Gestängebaugruppe, wie sie vorstehend beschrieben und vorteilhaft weitergebildet ist. Wie bereits mehrfach erwähnt wurde, ist das Anhängesystem bevorzugt eine Dreipunktaufhängung für eine Landmaschine. Bei einer bestimmungsgemäß betriebsbereiten Anordnung der Dreipunktaufhängung an einer Landmaschine ist bevorzugt die erste Konfiguration die vorstehend bereits beschriebene unterste Stellung des Unterlenkers und ist die dritte Konfiguration die vorstehend beschriebene oberste Stellung des Unterlenkers relativ zur Hubstange.

Die vorliegende Erfindung wird nachfolgend anhand der beiliegenden Zeichnungen näher erläutert werden. Es stellt dar:
- Fig. 1: eine schematische Seitenansicht einer Dreipunktaufhängung als bevorzugte Verwendung einer Gestängebaugruppe einer ersten Ausführungsform der vorliegenden Anmeldung,
- Fig. 2: eine schematische Seitenansicht der Gestängebaugruppe von Fig. 1 in der vorstehend beschriebenen ersten Konfiguration der Gestängebaugruppe,
- Fig. 3: eine schematische Seitenansicht der Gestängebaugruppe von Fig. 1 und 2 in der zweiten Konfiguration der Gestängebaugruppe,
- Fig. 4: eine schematische Seitenansicht der Gestängebaugruppe der Fig. 1 bis 3 in der dritten Konfiguration der Gestängebaugruppe,
- Fig. 5: eine der Ansicht von Fig. 2 entsprechende schematische Seitenansicht einer Gestängebaugruppe einer zweiten Ausführungsform in der ersten Konfiguration der Gestängebaugruppe,
- Fig. 6: eine der Ansicht von Fig. 3 entsprechende schematische Seitenansicht der Gestängebaugruppe von Fig. 5 in der zweiten Konfiguration der Gestängebaugruppe,
- Fig. 7: eine der Ansicht von Fig. 4 entsprechende schematische Seitenansicht der Gestängebaugruppe der Fig. 5 und 6 in der dritten Konfiguration der Gestängebaugruppe, und
- Fig. 8: eine vergrößerte schematische Seitenansicht der Kopplungsanordnung von Fig. 7.

Die Figuren sind nicht maßstäblich und lediglich schematischer Natur.

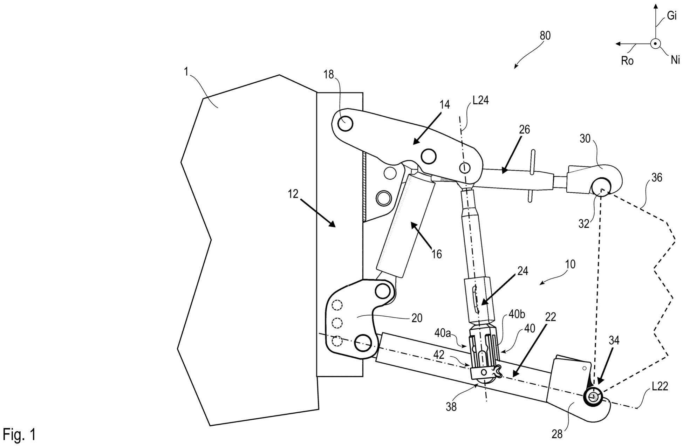

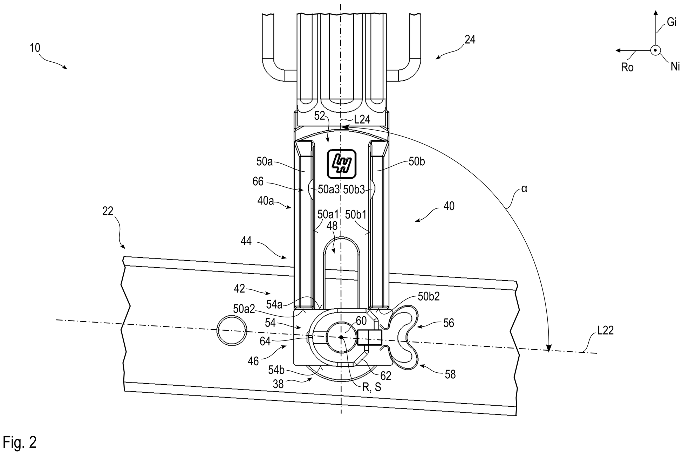

In Fig. 1 ist an einem lediglich schematisch angedeuteten Traktor 1 ein bevorzugtes Anhängesystem in Gestalt einer Dreipunktaufhängung 80 angeordnet. Die Dreipunktaufhängung 80 ist am Heck des Traktors 1 angeordnet. Die Dreipunktaufhängung 80 umfasst eine im Zusammenhang mit den Figuren 2 bis 4 näher beschriebene erste Ausführungsform einer Gestängebaugruppe 10. Fig. 1 soll zur Sicherstellung eines gemeinsamen Verständnisses eine an sich bekannte Dreipunktaufhängung lediglich im Prinzip darstellen.

Ein kartesisches Dreibein in der rechten oberen Ecke der Figuren 1 bis 4 zeigt zur besseren Orientierung das Koordinatensystem des Traktors 1 an. Ein in Traktorlängsrichtung verlaufender und in Vorwärtsfahrtrichtung weisender Pfeil Ro zeigt die Rollachse des Traktors 1 an. Mit 'Gi' ist die Gierachse des Traktors 1 bezeichnet, wobei der Pfeil der Gierachse Gi vom Aufstandsuntergrund des Traktors 1 weg weist.

Mit 'Ni' ist nach der Rechte-Hand-Regel die in Traktorquerrichtung verlaufende Nickachse bezeichnet.

Die Dreipunktaufhängung 80 ist mittels einer Basis 12 am Heck des Traktors 1 befestigt. Im oberen Bereich der Basis 12 ist ein Hubarm 14 angelenkt. Der Hubarm 14 ist über einen Hubaktuator 16, etwa eine hydraulische Kolben-Zylinder-Anordnung, um seinen Anlenkort 18 an der Basis 12 schwenkbar.

Der Hubaktuator 16 ist im dargestellten Beispiel an seinem unteren Längsende über einen basisfesten Hilfsträger 20 basisfest angelenkt und ist an seinem oberen Längsende am Hubarm 14 angelenkt.

Im dargestellten Beispiel ist an dem basisfesten Hilfsträger 20 außerdem ein Unterlenker 22 angelenkt. Eine Hubstange 24 verbindet den Unterlenker 22 mit dem Hubarm 14. So ist der Unterlenker 22 durch den Hubaktuator 16 schwenkbar.

Basisfest angelenkt ist auch ein Oberlenker 26, welcher die Dreipunktaufhängung 80 komplettiert.

An den basisfernen Längsenden des Unterlenkers 22 und des Oberlenkers 26 sind Verbindunghaken 28 bzw. 30 angeordnet, in deren Hakenmäuler in an sich bekannter Weise Verbindungskugeln 32 bzw. 34 zum Anhängen eines die Verbindungskugeln 32, 34 tragenden, in Fig. 1 lediglich strichliniert angedeuteten Arbeitsgeräts 36 an den Traktor 1 lösbar aufgenommen werden können.

Zur räumlichen Justierung der Verbindungshaken 28 und 30, etwa zur Anpassung an unterschiedliche Arbeitsgeräte, können einzelne Stangen und Lenker längenveränderlich ausgestaltet sein. Im dargestellten Ausführungsbeispiel sind der Oberlenker 26 und die Hubstange 24 längenveränderlich, insbesondere durch ein Gewinde.

Die Hubstange 24 ist eine erste Stange der Gestängebaugruppe 10 im Sinne der Beschreibungseinleitung. Sie erstreckt sich längs einer strichpunktiert eingezeichneten virtuellen ersten Längsachse L24. Der Unterlenker 22 ist eine zweite Stange der Gestängebaugruppe 10 im Sinne der Beschreibungseinleitung. Er erstreckt sich längs einer strichpunktiert eingezeichneten virtuellen zweiten Längsachse L22.

Die Hubstange 24 weist an ihrem dem Unterlenker 22 näheren Längsende 38 einen Gabelabschnitt 40 auf, zwischen dessen Gabelschenkeln 40a und 40b ein Abschnitt des Unterlenkers 22 aufgenommen ist. Der Unterlenker 22 ist mittels einer Kopplungsanordnung 42 mit der Hubstange 24, insbesondere mit dem Gabelabschnitt 40, verbunden. Der Gabelabschnitt 40 und die Kopplungsanordnung 42 sind bezüglich einer den Spaltraum zwischen den Gabelschenkeln 40a und 40b mittig durchsetzenden Ebene spiegelsymmetrisch ausgebildet.

In den Figuren 2 bis 4 sind der Gabelabschnitt 40 der Hubstange 24 und der daran angelenkte Unterlenker 22 in drei unterschiedlichen Konfigurationen dargestellt. Die Konfiguration von Fig. 2 entspricht dabei der Konfiguration von Fig. 1. Diese ist die in der Beschreibungseinleitung genannte erste Konfiguration.

Die nachfolgende Beschreibung des dem Betrachter in den Figuren 2 bis 4 zugewandten Gabelschenkels 40a gilt unter der genannten Spiegelsymmetriebedingung für eine zu der jeweiligen Zeichenebene der Figuren 2 bis 4 parallele, hinter dem Gabelschenkel 40a gelegene Symmetrieebene in gleicher Weise für den Gabelschenkel 40b und den mit diesem zusammenwirkenden Abschnitten der Kopplungsanordnung 42.

Die Kopplungsanordnung 42 weist eine an der Hubstange 24 ausgebildete und angeordnete erste Kopplungsformation 44 und eine am Unterlenker 22 angeordnete zweite Kopplungsformation 46 auf.

Die erste Kopplungsformation 44 ist im dargestellten Ausführungsbeispiel vollständig einstückig mit der Hubstange 24, insbesondere mit deren Gabelabschnitt 40 ausgebildet. Die erste Kopplungsformation 44 umfasst ein Durchgangslangloch 48 sowie zwei gegenüber der Ebene des Durchgangslochs 48 vorstehende leistenartige Vorsprünge 50a und 50b. Die leistenartigen Vorsprünge 50a und 50b, zumindest deren aufeinander zu weisenden Flanken 50a1 und 50b1, verlaufen zueinander und zur ersten Längsachse L24 parallel. Die beiden leistenartigen Vorsprünge 50a und 50b, insbesondere deren aufeinander zu weisenden Flanken 50a1 und 50b1, definieren daher zwischen sich eine sich längs der ersten Längsachse L24 und parallel zu dieser ersten Längsachse L24 erstreckende Nut 52.

Die zweite Kopplungsformation 46 umfasst ein plattenförmiges Bauteil 54 mit zu drei Seiten etwa rechteckiger Struktur. An der vierten Seite des plattenförmigen Bauteils 54 ist eine gebogene bzw. gekrümmte Flachfeder 56 in dem plattenförmigen Bauteil 54 verankert. Die gekrümmte Flachfeder 56 bildet einen Rastvorsprung 58 aus, welcher über die beiden parallelen Seitenränder 54a und 54b der rechteckigen Struktur des plattenförmigen Bauteils 54 seitlich vorsteht.

Das im Wesentlichen ebene plattenförmige Bauteil 54 erstreckt sich im dargestellten Ausführungsbeispiel im Wesentlichen parallel zur Zeichenebene von Fig. 2. Ein Verbindungsschaft 60 erstreckt sich orthogonal zur Erstreckungsebene des plattenförmigen Bauteils 54 durch das Durchgangslangloch 48 und durch eine passende Öffnung im Unterlenker 22 sowie durch das entsprechende Durchgangslangloch im parallelen Gabelschenkel 40b bis hin zu einem dem plattenförmigen Bauteil 54 im Rahmen der beschriebenen Spiegelsymmetrie entsprechenden weiteren plattenförmigen Bauteil auf der vom Betrachter der Fig. 2 abgewandten Seite.

Die zweite Kopplungsformation 46 ist in Fig. 2 in ihrer in der Beschreibungseinleitung beschriebenen ersten Betriebsstellung angeordnet, welche der in Fig. 2 gezeigten ersten Konfiguration der Gestängebaugruppe 10 zugeordnet ist.

Das plattenförmige Bauteil 54 ist gemeinsam mit dem Verbindungsschaft 60 um eine zur Zeichenebene von Fig. 2 orthogonale Rotationsachse R rotierbar. Die Rotationsachse R ist koaxial zu einer Schwenkachse S, um welche der Unterlenker 22 relativ zur Hubstange 24 in den Grenzen der Konstruktion von Fig. 1 schwenkbar ist. Die erste Längsachse L24 und die zweite Längsachse L22 schließen in jeder der gezeigten drei Konfigurationen einen veränderlichen Winkel α ein, welcher stets größer als Null ist. Der Verbindungsschaft 60 kann starr oder/und lösbar mit dem plattenförmigen Bauteil 54 verbunden sein.

In der ersten Betriebsstellung und damit in der ersten Konfiguration liegt der Seitenrand 54a des plattenförmigen Bauteils 54 der zweiten Kopplungsformation 42 als Anschlagformation an kurzen Flanken 50a2 und 50b2 an den dem Längsende 38 nächstgelegenen Längsenden der leistenartigen Vorsprünge 50a und 50b an, welche als Anschlaggegenformation wirken.

Gleichzeitig liegt das dem Längsende 38 der Hubstange 24 nähergelegene untere Ende des Durchgangslangloch 48 an einem unteren Abschnitt der Mantelfläche des Verbindungsschafts 60 an, sodass eine translatorische Verlagerung des Unterlenkers 22 relativ zur Hubstange 24 durch zwei entgegengesetzt wirkende körperliche Anlagen verhindert ist. In der ersten Konfiguration kann der Unterlenker 22 relativ zur Hubstange 24 allenfalls um die durch den Verbindungsschaft 60 definierte Schwenkachse S unter Veränderung des Winkels α schwenken.

Aufgrund der Rotierbarkeit der zweiten Kopplungsformation 46 um die Rotationsachse R könnte das plattenförmige Bauteil auch um 180° bezüglich der Darstellung von Fig. 2 rotiert angeordnet sein, also mit einer nach links weisenden Flachfeder 56.

Zur erleichterten Anordnung der zweiten Kopplungsformation 46 in der ersten Betriebsstellung kann das plattenförmige Bauteil 54, welches durch einen mit einer Haltefeder 62 gehaltenen Stift 64 lösbar am Verbindungsschaft 60 gesichert ist, vom Verbindungsschaft 60 gelöst und längs der Rotationsachse R von dem Unterlenker 22 und der Hubstange 24 entfernt werden, kann im entfernten Zustand in gewünschter Weise orientiert werden und dann in die in Fig. 2 gezeigte erste Betriebsstellung verbracht und mit Stift 64 und Haltefeder 62 gesichert werden.

Das plattenförmige Bauteil 54 und das oben beschriebene entgegengesetzte plattenförmige Bauteil auf der anderen Seite des Unterlenkers 22 bzw. des entgegengesetzten Gabelschenkels 40b halten somit zwischen sich formschlüssig den Unterlenker 22 und den Gabelabschnitt 40 der Hubstange 24.

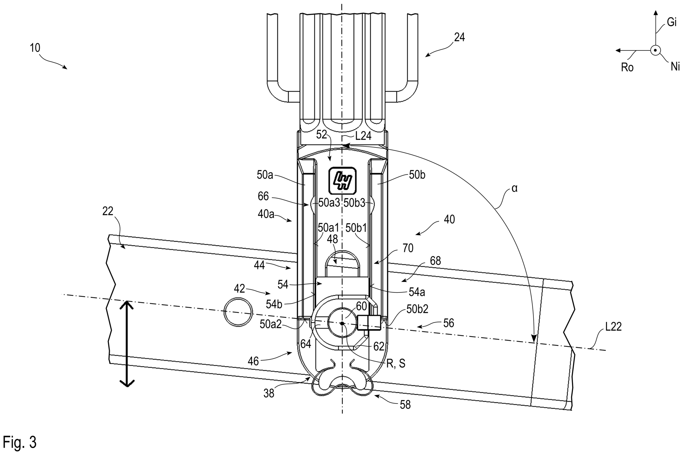

Nachzutragen ist, dass in den aufeinander zu weisenden Flanken 50a1 und 50b1 der leistenartigen Vorsprünge 50a bzw. 50b an bezüglich der virtuellen ersten Längsachse L24 gleichen Axialpositionen Teil-Rastausnehmungen 50a3 und 50b3 einer Rastausnehmung 66 ausgebildet sind, welche in der weiter unten im Zusammenhang mit Fig. 3 erläuterten dritten Betriebsstellung der zweiten Kopplungsformation 46 der Aufnahme des Rastvorsprungs 58 dienen.

Die in Fig. 2 gezeigte erste Konfiguration der Gestängebaugruppe 10 wird etwa dann gewählt, wenn das mittels der Dreipunktaufhängung 80 an den Traktor 1 angehängte Arbeitsgerät 36 in einer bestimmten relativen Höhenlage zum Traktor 1 bewegt werden soll, etwa in einen Boden eingreifend, auf welchem der Traktor 1 gerade fährt.

In Fig. 3 ist die zweite Kopplungsformation 46 in ihrer zweiten Betriebsstellung und die Gestängebaugruppe 10 in ihrer zweiten Konfiguration gezeigt. Bezüglich der ersten Betriebsstellung von Fig. 2 ist die zweite Kopplungsformation 46 um 90° im Uhrzeigersinn gedreht.

In der zweiten Betriebsstellung läuft der rechteckige Abschnitt des plattenförmigen Bauteils 54 in der Nut 52 derart, dass die Seitenränder 54a und 54b des plattenförmigen Bauteils den aufeinander zu weisenden Flanken 50a1 bzw. 50b1 unmittelbar gegenüberliegen bzw. an diesen gleitend anliegen.

Die Seitenränder 54a und 54b tragen ebenso wie der Verbindungsschaft 60 zu einer Führungsformation 68 der zweiten Kopplungsformation 46 bei, welche im Führungseingriff mit einer Führungsgegenformation 70, die die leistenartigen Vorsprünge 50a und 50b, und dort insbesondere die aufeinander zu weisenden Flanken 50a1 und 50b1, sowie das Durchgangslangloch 48 umfasst, die zweite Kopplungsformation und mit dieser den sie tragenden Unterlenker 22 zur Bewegung relativ zur Hubstange 24 längs der virtuellen ersten Längsachse L24 führt.

Die in Fig. 3 dargestellte zweite Konfiguration der Gestängebaugruppe 10 ist eine sogenannte 'Schwimmkonfiguration', in welcher sich der Unterlenker 22 mit dem von ihm durchsetzten Verbindungsschaft 60 relativ zur Hubstange 24 über die Länge des Durchgangslanglochs 48 längs der ersten Längsachse L24 frei bewegen kann.

Wegen der freien Beweglichkeit der zweiten Kopplungsformation 46 bzw. des Unterlenkers 22 relativ zur Hubstange 24 in dem beschriebenen Freiheitsgrad ist die Orientierung der zweiten Kopplungsformation 46 in ihrer zweiten Betriebsstellung im Gegensatz zur ersten Betriebsstellung von Bedeutung. Der Rastvorsprung 58 ist in der zweiten Betriebsstellung so orientiert, dass er nicht in die Rastausnehmung 66 gelangen kann, insbesondere so, dass er gar nicht erst in der Nut 52 läuft.

Wie in Fig. 3 überdies zu erkennen ist, ist die erste Kopplungsformation 44 derart ausgestaltet, dass sie bezüglich einer durch die erste Längsachse L24 und die Schwenkachse S aufgespannte Symmetrieebene spiegelsymmetrisch ist. Ebenso ist die zweite Kopplungsformation 46 mit Ausnahme des Stifts 64 und der Haltefeder 62 zusätzlich zu der bereits beschriebenen Spiegelsymmetrie bezüglich einer weiteren zur ersten Spiegelsymmetrieebene orthogonalen Spiegelsymmetrieebene spiegelsymmetrisch ausgebildet. In der zweiten Betriebsstellung von Fig. 3 ist diese weitere Spiegelsymmetrieebene durch die erste Längsachse L24 und durch die Rotationsachse R aufgespannt. Da die Schwenkachse S und die Rotationsachse R koaxial sind, sind die beiden zuletzt genannten Symmetrieebenen von erster und zweiter Kopplungsformation 44 bzw. 46 in der zweiten und auch in der dritten Betriebsstellung identisch.

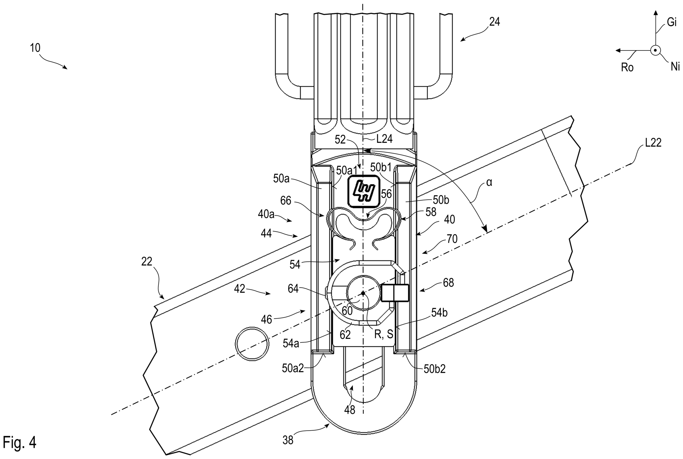

In Fig. 4 ist die Gestängebaugruppe 10 in ihrer dritten Konfiguration gezeigt, in welcher sich die zweite Kopplungsformation 46 in ihrer dritten Betriebsstellung befindet. Bezüglich der zweiten Betriebsstellung ist die zweite Kopplungsformation 46 in der dritten Betriebsstellung um 180° bezüglich der Rotationsachse R rotiert. Der durch die gekrümmte und an beiden Enden fest im plattenförmigen Bauteil 54 eingespannte Flachfeder 56 gebildete Rastvorsprung 58 befindet sich nun an dem in Fig. 3 oberen Längsende des plattenförmigen Bauteils 54. Der Rastvorsprung 58 ist in die Rastausnehmung 66 eingerückt und greift körperlich in diese ein, wobei er sich vorteilhaft mit seinem eingreifenden Konturabschnitt flächig an die Wandung der Rastausnehmung 66 anschmiegt und an dieser bevorzugt anliegt. In der in den Figuren 1 bis 4 gezeigten ersten Ausführungsform bildet die Rastausnehmung 66 die in der Beschreibungseinleitung genannte Hemmungsformation und der Rastvorsprung 58 die mit dieser kooperierende Hemmungsgegenformation.

Wie in der ersten Konfiguration liegt auch in der dritten Konfiguration ein Mantelflächenabschnitt des Verbindungsschafts 60 an dem nun oberen bzw. vom Längsende 38 der Hubstange 24 ferner gelegenen Längsende des Durchgangslangloch 48 an. Während der anliegende Mantelflächenabschnitt in der ersten Konfiguration ein zum Längsende 38 hinweisender Umfangsabschnitt der Mantelfläche des Verbindungsschafts 60 ist, ist dies in der dritten Konfiguration ein vom Längsende 38 wegweisender Umfangsabschnitt. Durch das Zusammenwirken von anliegendem Umfangsabschnitt des Verbindungsschafts 60 und Rasteingriff zwischen Rastvorsprung 58 und Rastausnehmung 66 sind die Hubstange 24 und der Unterlenker 22, wie zuvor in der ersten Konfiguration, auch in der dritten Konfiguration und damit in der dritten Betriebsstellung der zweiten Kopplungsformation 46 bezüglich einer translatorischen Bewegung längs der virtuellen ersten Längsachse L24 spielfrei miteinander verbunden. Als einziger Bewegungsfreiheitsgrad kann der Unterlenker 22 auch in der dritten Konfiguration wie in der ersten Konfiguration relativ zur Hubstange 24 nur um die Schwenkachse S verschwenken.

Während in der ersten Konfiguration der Unterlenker 22 in einer dem Längsende 38 nächstgelegenen möglichen Relativposition an der Hubstange 24 festgelegt ist, befindet sich der Unterlenker 22 in der dritten Konfiguration an der vom Längsende 38 am weitesten entfernt gelegenen möglichen Relativposition an der Hubstange 24.

Die dritte Konfiguration wird beispielsweise gewählt, wenn der Traktor 1 bei stark verringerten Kollisionsrisiko durch die an seinem Heck angebrachte Dreipunktaufhängung 80 rangieren soll.

Durch die Ausgestaltung des Rastvorsprungs 58 als elastisch verformbares Federbauteil ist der zwischen Rastvorsprung 58 und Rastausnehmung 66 hergestellte Rasteingriff überwindbar. Dies bedeutet, dass der Rasteingriff durch eine ausreichend große auf den Unterlenker 22 einwirkende Kraft zerstörungsfrei gelöst werden kann. Dabei ist aufgrund des durch die Führungsformation 68 und die Führungsgegenformation 70 vorgegebenen Freiheitsgrads nur die Kraftkomponente längs des durch die Führungsformation 68 und die Führungsgegenformation 70 translatorischen Bewegungsfreiheitsgrads entscheidend. Da der Verbindungsschaft 60 am oberen bzw. dem Längsende 38 fernliegenden Längsende des Durchgangslangloch 48 anliegt, besteht im dargestellten Ausführungsbeispiel ein Bewegungsfreiheitsgrad des Unterlenkers 22 und der an ihm angebrachten zweiten Kopplungsformation 46 nur ausgehend von der dritten Konfiguration in Richtung zu dem dem Kopplungsort von Unterlenker 22 und Hubstange 24 nähergelegenen Längsende 38 hin.

Eine derartige Kraftkomponente tritt beispielsweise auf, wenn unabsichtlich oder unbewusst und entgegen der eigentlichen Bestimmung in der dritten Konfiguration eine Last an die Verbindungshaken 28 und 30 der Dreipunktaufhängung 80 angehängt wird.

In vorteilhafter Weise führt eine solche in der dritten Konfiguration ausgeübte bestimmungsfremde Last auf den Unterlenker 22 zu einem Überwinden des überwindbaren Rasteingriffs. Die dritte Konfiguration wird zwar aufgegeben, jedoch bleibt die Gestängebaugruppe 10 insgesamt unversehrt. Eine sich durch die Überwindung des Rasteingriffs einstellende Verformung des Rastvorsprungs 58 ist lediglich vorübergehend und reversibel.

In vorteilhafter Weise befinden sich auch in der dritten Ausführungsform die Führungsformation 68 und die Führungsgegenformation 70 in Führungseingriff miteinander, sodass auf eine Überwindung des Rasteingriffs eine definierte Bewegung des Unterlenkers 22 relativ zur Hubstange 24 sowie der zweiten Kopplungsformation 46 relativ zur ersten Kopplungsformation 44 folgt. Dies erhöht in vorteilhafter Weise die Betriebssicherheit der Gestängebaugruppe 10 und mit dieser der Dreipunktaufhängung 80.

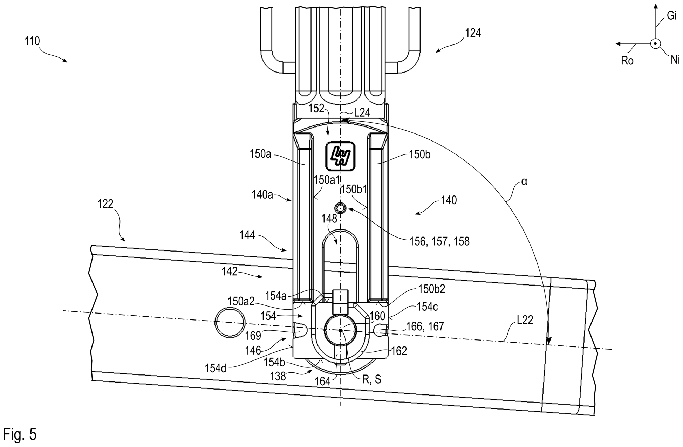

In den Figuren 5 bis 8 ist eine zweite Ausführungsform der Gestängebaugruppe der vorliegenden Erfindung dargestellt. In den Figuren 5 bis 8 sind gleiche und funktionsgleiche Bauteile und Bauteilabschnitte der zweiten Ausführungsform mit den gleichen Bezugszeichen versehen wie in den Figuren 1 bis 4 zur ersten Ausführungsform, jedoch erhöht um die Zahl 100. Die zweite Ausführungsform wird nachfolgend nur insofern beschrieben werden, wie sie sich von der ersten Ausführungsform unterscheidet, auf deren Beschreibung ansonsten auch zur Erläuterung der zweiten Ausführungsform verwiesen wird.

In Fig. 5 ist die zweite Ausführungsform der Gestängebaugruppe 110, wie zuvor in Fig. 2 die erste Ausführungsform, in ihrer ersten Konfiguration gezeigt. Dies bedeutet, dass sich die zweite Kopplungsformation 146 in ihrer ersten Betriebsstellung befindet. Ein Bauteilrand 154a liegt körperlich an den kurzen Flanken 150a2 und 150b2 der leistenartigen Vorsprünge 150a und 150b an. Ebenso liegt ein zum Längsende 138 weisender Abschnitt der Außenumfangsfläche des Verbindungsschafts 160 an dem längsendnäheren gekrümmten Begrenzungsrand des Langlochs 148 an, sodass der Unterlenker 122 relativ zur Hubstange 124 im Wesentlichen translatorisch festgelegt ist und lediglich um die zur Rotationsachse R koaxiale Schwenkachse S drehen kann. Die Rotationsachse R und die Schwenkachse S sind orthogonal zu den Zeichenebenen der Figuren 2 bis 5.

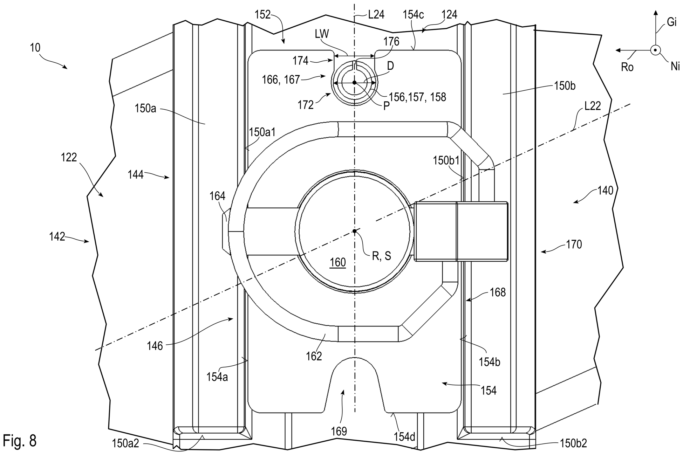

Der wesentliche Unterschied zwischen der ersten und der zweiten Ausführungsform besteht darin, dass der Rastvorsprung 158 als Spannstift 157 ausgebildet und an der Hubstange 124 festgelegt ist. Der Spannstift 157 ist als Feder 156 ausgebildet, denn er kann unter Verringerung der Spaltweite seines Längsspalts 176 (siehe Fig. 8) elastisch verformt werden. Näheres hierzu wird weiter unten im Zusammenhang mit Fig. 8 erläutert, welche einen Rasteingriff der zweiten Kopplungsformation 146, im dargestellten Ausführungsbeispiel ihres plattenförmigen Bauteils 154, mit dem Rastvorsprung 158 zeigt.

Der im Wesentlichen, d. h. beispielsweise mit Ausnahme möglicherweise angefaster Längsenden, zylindrische Spannstift ist in der Nut 152 zwischen den leistenartigen Vorsprüngen 150a und 150b, bevorzugt in der Quermitte der Nut 152, angeordnet und ragt im dargestellten Ausführungsbeispiel orthogonal zur Zeichenebene der Figuren 5 bis 8, das heißt auch orthogonal zum Nutgrund der Nut 152, vom Nutgrund hervor. Die Nut 152 ist daher Federträger des ein Federbauteil bildenden Spannstifts 157.

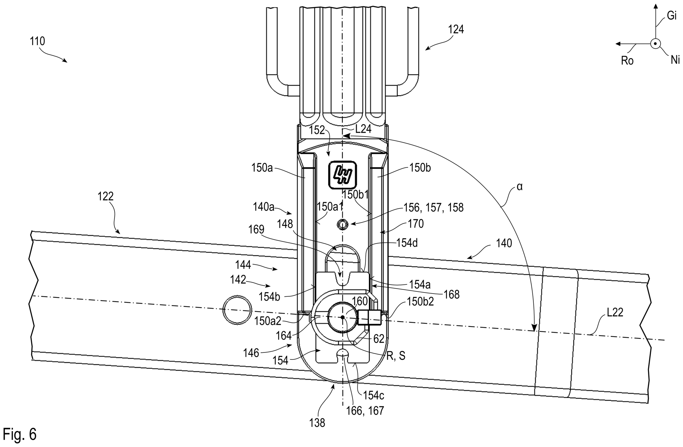

Zur Herstellung eines überwindbaren Rasteingriffs weist die zweite Kopplungsformation 146, insbesondere deren plattenförmiges Bauteil 154, an einem Querrand 154c, welcher die die Führungsformation 168 (siehe Fig. 6, 7 und 8) bildenden Längsränder 154a und 154b verbindet, die mit dem Rastvorsprung 158 kooperierende Rastausnehmung 166 auf. Die Rastausnehmung 166 ist als Rastmaul 167 ausgebildet, welches ebenfalls im Zusammenhang mit Fig. 8 näher erläutert werden wird.

An dem entgegengesetzten Querrand 154d weist die zweite Kopplungsformation 146, insbesondere deren plattenförmiges Bauteil 154, eine Ausnehmung 169 auf, in welche der Rastvorsprung 158 aufgrund ihrer Abmessungen einfahren und aus dieser wieder ausfahren kann, ohne dabei einen Rasteingriff mit der zweiten Kopplungsformation 146 zu bewirken.

Gemäß der zweiten Ausführungsform ist die in der Beschreibungseinleitung genannte Hemmungsformation durch die Rastausnehmung 166 gebildet und die Hemmungsgegenformation durch den Rastvorsprung 158.

In Fig. 6 ist die zweite Ausführungsform der Gestängebaugruppe 110 in ihrer zweiten Konfiguration dargestellt, die erneut eine Schwimmkonfiguration ist, wie sie oben im Zusammenhang mit Fig. 3 näher erläutert wurde. Die zweite Kopplungsformation 146 befindet sich relativ zur Hubstange 124 dementsprechend in ihrer zweiten Betriebsstellung.

In der zweiten Konfiguration der Gestängebaugruppe 110 eilt der Bauteilrand 154d, welcher die Ausnehmung 169 aufweist, bei einer Bewegung der zweiten Kopplungsformation 146 in Richtung zur längsendnäheren Endposition hin dem entgegengesetzten Bauteilrand 154c mit der Rastausnehmung 166 voraus. Durch die Ausnehmung 169 im Bauteilrand 154d kann der Bewegungsweg der zweiten Kopplungsformation 146 und insbesondere des plattenförmigen Bauteils 154 relativ zur Hubstange 24 längs der ersten Längsachse L24 vergrößert sein, da der Rastvorsprung 158 in Gestalt des Spannstiftes 157 in die Ausnehmung 169 einfahren kann und erst durch die Tiefe der Ausnehmung 169 verzögert in einen die Bewegung der zweiten Kopplungsformation 146 beendenden Anlageeingriff mit dem Bauteilrand 154d gelangt.

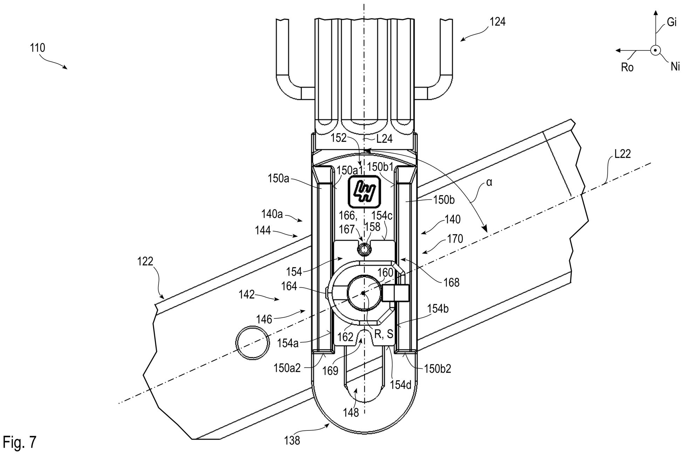

In den Figuren 7 und 8 ist die Gestängebaugruppe 110 in ihrer dritten Konfiguration und dementsprechend die zweite Kopplungsformation 146 in ihrer dritten Betriebsstellung dargestellt. Die Rastausnehmung 166 befindet sich in einem überwindbaren Rasteingriff mit dem Rastvorsprung 158 und hält so die zweite Kopplungsformation 142 und mit dieser den Unterlenker 122 gegen eine translatorische Bewegung fest. Es gilt das oben zu Fig. 4 Gesagte auch für die dritte Konfiguration der zweiten Ausführungsform der Gestängebaugruppe 110 mit der Ausnahme, dass der Rastvorsprung 158 durch einen Spannstift 157 an der Hubstange 124 und die Rastausnehmung 166 an der zweiten Kopplungsformation 146 ausgebildet sind.

In Fig. 8 ist die orthogonal zur Zeichenebene der Fig. 8 ausgerichtete Stiftachse P des als Spannstift 157 ausgebildeten Rastvorsprungs 158 gezeigt.

Der Spannstift 157 befindet sich in einem Maulaufnahmeraum 172, in welchen er aufgrund einer Bewegung durch einen schmäleren Mauleintritt 174 hindurch gelangt ist. Die lichte Weite LW des Mauleintritts 174 ist um einen vorbestimmten Betrag kleiner als der Außendurchmesser D des Spannstifts 157.

Ein den Spannstift 157 über seine gesamte axiale Länge und über seine gesamte radiale Abmessung bezüglich der Stiftachse P durchsetzender Schlitz 176 gestattet eine elastische Formänderung des Spannstifts 157 und somit einen Durchgang durch den Mauleintritt 174. Nach dem Erreichen des verglichen mit dem Mauleintritt 174 weiteren Maulaufnahmeraums 172 entspannt sich der Spannstift 157 auf seine ursprüngliche Gestalt und legt somit die zweite Kopplungsformation 146 längs der ersten Längsachse L24 relativ zur ersten Hubstange 124 fest.

Der zwischen Spannstift 157 und Rastausnehmung 166 gebildete Rasteingriff ist durch eine Kraft überwindbar, welche abhängig ist vom Abmessungsunterschied zwischen der lichten Weite LW und dem Außendurchmesser D, vom Material des Spannstifts 157, welches üblicherweise Federstahl ist, und von der Materialstärke des hohlen Spannstifts 157. Für eine sichere Herstellbarkeit und Überwindbarkeit des Rasteingriffs zwischen Spannstift 157 und Rastausnehmung 166 ist bevorzugt der Schlitz 172 in der Quermitte eines durch den Mauleintritt 174 überstrichenen Bereichs, wenigstens in dem durch den Mauleintritt 174 überstrichenen Bereich, angeordnet.

Die zweite Ausführungsform mit dem Spannstift 157 als Rastvorsprung 158 gestattet eine sehr kostengünstige Herstellung von Gestängebaugruppen 110 mit verrastbarer Kopplungsanordnung 142, da Spannstifte 157 als Normbauteile in großer Stückzahl mit gleich bleibenden Eigenschaften hergestellt werden und kommerziell am Markt verfügbar sind.

Anmerkung: die Fig. 1 ist auf Grundlage einer von Herrn Frank Bruns-Ballhausen auf Wikipedia veröffentlichten Darstellung gemäß der unter https://commons.wikimedia.org/wiki/File:Dreipunkt_mechanik.svg erteilten Benutzungserlaubnis als reine Schwarz-Weiß-Zeichnung erstellt.

## Patentansprüche

1. Gestängebaugruppe (10; 110) für ein Anhängesystem (80), wobei die Gestängebaugruppe (10; 110) eine sich längs einer ersten Längsachse (L24) erstreckende erste Stange (24; 124) und eine sich längs einer zweiten Längsachse (L22) erstreckende zweite Stange (22; 122) umfasst, wobei die erste und die zweite Stange (24, 22; 124, 122) durch eine Kopplungsanordnung (42; 142) verbunden sind, wobei die erste und die zweite Längsachse (L24, L22) einen Winkel (α) einschließen, wobei die zweite Stange (22; 122) am Ort ihrer Kopplung mit der ersten Stange (24; 124) relativ zur ersten Stange (24; 124) entlang der ersten Längsachse (L24) verschiebbar ist zwischen einer näher bei einem Längsende (38; 138) der ersten Stange (24; 124) gelegenen längsendnäheren Position und einer weiter von dem Längsende (38; 138) entfernt gelegenen längsendferneren Position,
wobei die Kopplungsanordnung (42; 142) eine erste Kopplungsformation (44; 144) und eine zweite Kopplungsformation (46; 146) aufweist, wobei die erste Kopplungsformation (44; 144) an der ersten Stange (24; 124) angeordnet ist, wobei die zweite Kopplungsformation (46; 146) sowohl relativ zur ersten Stange (24; 124) als auch relativ zur zweiten Stange (22; 122) beweglich an der zweiten Stange (22; 122) angeordnet ist,
wobei die zweite Kopplungsformation (46; 146) eine Anlageformation (54a, 54b; 154a, 154b) sowie eine Hemmungsformation (58; 166) aufweist und wobei die erste Stange (24; 124) eine Anlagegegenformation (50a2, 50b2; 150a2, 150b2) sowie eine Hemmungsgegenformation (66; 158) aufweist,
wobei die zweite Kopplungsformation (46; 146) relativ zur ersten Stange (24; 124) in eine erste Betriebsstellung bringbar ist, in welcher die Anlageformation (54a, 54b; 154a, 154b) an der Anlagegegenformation (50a2, 50b2; 150a2, 150b2) anliegt und dadurch eine Bewegung der zweiten Stange (22; 122) relativ zur ersten Stange (24; 124) von der längsendnäheren Position hin zur längsendferneren Position hemmt,
wobei die zweite Kopplungsformation (46; 146) relativ zur ersten Stange (24; 124) in eine von der ersten Betriebsstellung verschiedene zweite Betriebsstellung bringbar ist, in welcher eine Bewegung der zweiten Stange (22; 122) relativ zur ersten Stange (24; 124) entlang der ersten Längsachse (L24) gestattet ist, und
wobei die zweite Kopplungsformation (46; 146) relativ zur ersten Stange (24; 124) in eine von der ersten und der zweiten Betriebsstellung verschiedene dritte Betriebsstellung bringbar ist, in welcher die Hemmungsformation (58; 166) mit der Hemmungsgegenformation (66; 158) zusammenwirkt und dadurch eine Bewegung der zweiten Stange (22; 122) relativ zur ersten Stange (24; 124) von der längsendferneren Position hin zur längsendnäheren Position hemmt,
**dadurch gekennzeichnet, dass** eine Formation aus Hemmungsformation (58; 166) und Hemmungsgegenformation (66; 158) einen Rastvorsprung (58; 158) und die jeweils andere Formation aus Hemmungsformation (58; 166) und Hemmungsgegenformation (66; 158) eine Rastausnehmung (66; 166) aufweist, wobei in der dritten Betriebsstellung die Hemmungsformation (58; 166) und die Hemmungsgegenformation (66; 158) sich, gegen eine Vorspannung ausrückbar, in einem überwindbaren Rasteingriff befinden.

2. Gestängebaugruppe (10; 110) für ein Anhängesystem (80) nach Anspruch 1, **dadurch gekennzeichnet, dass** der Rastvorsprung (58; 158) oder/und die Rastausnehmung (66; 166) zur Überwindung eines zwischen Rastvorsprung (58; 158) und Rastausnehmung (66; 166) hergestellten Rasteingriffs gegen Federvorspannung verlagerbar oder/und elastisch verformbar ausgebildet ist bzw. sind.

3. Gestängebaugruppe (10; 110) für ein Anhängesystem (80) nach Anspruch 2, **dadurch gekennzeichnet, dass** der Rastvorsprung (58; 158) eine Feder (56; 156), insbesondere eine einseitig oder beidseitig an einem Federträger (54; 152) eingespannte gekrümmte Flachfeder (56) oder Blattfeder oder Drahtfeder, umfasst.

4. Gestängebaugruppe (10; 110) für ein Anhängesystem (80) nach einem der vorhergehenden Ansprüche,
**dadurch gekennzeichnet, dass** der Rastvorsprung (58; 158) spiegelsymmetrisch ausgestaltet ist.

5. Gestängebaugruppe (10; 110) für ein Anhängesystem (80) nach einem der vorhergehenden Ansprüche,
**dadurch gekennzeichnet, dass** die zweite Kopplungsformation (46; 146) den Rastvorsprung (58; 158) und die erste Stange (24; 124) die Rastausnehmung (66) aufweist oder dass die zweite Kopplungsformation (146) die Rastausnehmung (166) und die erste Stange (124) den Rastvorsprung (158) aufweist.

6. Gestängebaugruppe (10; 110) für ein Anhängesystem (80) nach einem der vorhergehenden Ansprüche,
**dadurch gekennzeichnet, dass** die zweite Kopplungsformation (46; 146) eine Führungsformation (68; 168) aufweist, welche in der zweiten Betriebsstellung mit einer Führungsgegenformation (70; 170) der ersten Stange (24; 124) in Führungseingriff steht, um eine Bewegung der zweiten Stange (22; 122) relativ zur ersten Stange (24; 124) entlang der ersten Längsachse (L24) zu führen.

7. Gestängebaugruppe (10; 110) für ein Anhängesystem (80) nach Anspruch 6,
**dadurch gekennzeichnet, dass** die Hemmungsgegenformation (150a3) in einem längs der ersten Längsachse (L24) verlaufenden Längserstreckungsbereich der Führungsgegenformation (170) ausgebildet ist oder/und dass die Hemmungsgegenformation (66; 158) in der Führungsgegenformation (70; 170) ausgebildet ist.

8. Gestängebaugruppe (10; 110) für ein Anhängesystem (80) nach Anspruch 6 oder 7,
**dadurch gekennzeichnet, dass** die Führungsformation (68; 168) und die Führungsgegenformation (70; 170) auch in der dritten Betriebsstellung in Führungseingriff miteinander stehen.

9. Gestängebaugruppe (10; 110) für ein Anhängesystem (80) nach Anspruch 7 oder nach den Ansprüchen 7 und 8,
**dadurch gekennzeichnet, dass** die Führungsgegenformation (70; 170) längs der ersten Längsachse (L24) beiderseits über die Hemmungsgegenformation (66; 158) hinaus verläuft.

10. Gestängebaugruppe (10; 110) für ein Anhängesystem (80) nach einem der vorhergehenden Ansprüche,
**dadurch gekennzeichnet, dass** die erste und die zweite Stange (24, 22; 124, 122) um eine Schwenkachse (S) schwenkbar miteinander verbunden sind, so dass der zwischen der ersten und der zweiten Stange (24, 22; 124, 122) eingeschlossene Winkel (α) veränderlich ist, wobei die Schwenkachse (S) sowohl quer zur ersten Längsachse (L24) als auch quer zur zweiten Längsachse (L22) verläuft.

11. Gestängebaugruppe (10; 110) für ein Anhängesystem (80) nach einem der vorhergehenden Ansprüche,
**dadurch gekennzeichnet, dass** die zweite Kopplungsformation (46; 146) durch Rotation um eine Rotationsachse (R) zwischen der ersten, der zweiten und der dritten Betriebsstellung verstellbar ist.

12. Gestängebaugruppe (10; 110) für ein Anhängesystem (80) nach den Ansprüchen 10 und 11,
**dadurch gekennzeichnet, dass** die Schwenkachse (S) die Rotationsachse (R) ist.

13. Gestängebaugruppe (10; 110) für ein Anhängesystem (80) nach einem der vorhergehenden Ansprüche,
**dadurch gekennzeichnet, dass** die erste Stange (24; 124) eine Hubstange (24; 124) einer Dreipunktaufhängung (80) ist und dass die zweite Stange (22; 122) ein Unterlenker (22; 122) der Dreipunktaufhängung (80) ist.

14. Anhängesystem (80) für eine Landmaschine (1) mit einer Gestängebaugruppe (80) nach einem der vorhergehenden Ansprüche.

15. Anhängesystem (80) nach Anspruch 14,
**dadurch gekennzeichnet, dass** das Anhängesystem (80) eine Dreipunktaufhängung (80) für eine Landmaschine (1) ist, wobei die Gestängebaugruppe (10; 110) eine Gestängebaugruppe (10; 110) gemäß Anspruch 13 ist.
